# FASCICULE DE BREVET EUROPEEN

(11) **EP 1 072 381 B1**
(45) Date de publication et mention de la délivrance du brevet: **11.06.2003**
(21) Numéro de dépôt: 00420163.8
(22) Date de dépôt: 21.07.2000
(51) Int. Cl.: B29C 45/14, F16J 9/28, F16J 9/20

(54) **Pièce mécanique pourvue d'une garniture surmoulée en matière plastique et procédé de fabrication d'une telle pièce mécanique**
Mechanisches Teil mit einer umgossenen Abdichtung aus Kunststoff und Verfahren zur Herstellung eines solchen mechanischen Teils
Mechanical part with a plastic overmoulded seal and method for manufacturing such a mechanical part

(30) Priorité: 21.07.1999 FR 9909628
(43) Date de publication de la demande: 31.01.2001
(73) Titulaire: FREUDENBERG, Société Anonyme:, F-71000 Macon (FR)
(72) Inventeur: GRAVIER, Stéphane, 69007 LYON (FR)
(74) Mandataire: Thibault, Jean-Marc

(56) Documents cités:
- EP-A- 0 583 599
- DE-A- 2 353 286
- DE-A- 19 618 013
- US-A- 4 067 093
- PATENT ABSTRACTS OF JAPAN vol. 14, no. 556 (M-1057), 11 décembre 1990 (1990-12-11) & JP 02 236062 A (TOYOTA AUTOM LOOM WORKS LTD), 18 septembre 1990 (1990-09-18)

## Description

L'invention concerne le domaine technique la mécanique et plus particulièrement le domaine de la fabrication et de la mise en oeuvre de pièces mécaniques qui doivent comporter, pour leur fonctionnement, des garnitures en matière plastique destinées notamment à assurer une fonction d'étanchéité.

De telles pièces sont décrites par exemple dans DE 2353286, JP02236062, DE 19618013 et EP 0583599.

Dans un domaine d'application préféré mais non exclusif de l'invention au circuit de freinage pour véhicule à moteur, il est connu de mettre en oeuvre, au sein d'un cylindre de commande hydraulique appelé cylindre de roue, un piston généralement en métal pourvu d'une garniture d'étanchéité en matière plastique ou élastomère, tel que du caoutchouc. Ce piston comprend le plus souvent une gorge périphérique à l'intérieur de laquelle est montée à force ou en extension la garniture, en élastomère, de forme sensiblement annulaire.

Si les pistons ainsi assemblés donnent, dans la mesure où ils ont passé avec succès les contrôles qualité, généralement entière satisfaction quant à leur fonctionnement, ce mode de fabrication présente toutefois un certain nombre d'inconvénients qui sans être toujours rédhibitoires pénalisent néanmoins les performances liées à la mise en oeuvre dudit piston et, dans une moindre mesure, celles liées à la fabrication des pistons.

En effet, la mise en place de la garniture en élastomère dans sa gorge d'accueil nécessite une déformation temporaire de la garniture qui peut entraîner un déchirement local, voire une rupture complète de la garniture. Les déchirures locales peuvent soit résulter d'une blessure de la garniture lors de sa manipulation ou de son montage au moyens d'un outil défectueux, soit intervenir lorsque la limite de déformation élastique de la garniture est atteinte en cours de montage. Ainsi, les diverses opérations effectuées sur la garniture sont susceptibles de rendre défectueuse une garniture qui était, juste après sa fabrication, conforme aux critères de qualité exigés.

La déchirure complète intervenant lors du processus de fabrication du piston n'a pas d'autre conséquence que la mise au rebut de la garniture endommagée et son remplacement par une garniture intacte. Cette perte de garniture vient néanmoins grever le coût de production des pistons.

En revanche, les déchirures locales peuvent avoir des conséquences beaucoup plus graves. En effet, ces déchirures ne sont pas toujours visibles après montage et le piston portant une garniture ainsi endommagée peut, dans certains cas, passer avec succès les différents contrôles qualité qui sont le plus souvent visuels. Ainsi, le piston avec sa garniture microfissurée est susceptible d'être mis en oeuvre dans le circuit de freinage d'un véhicule. Or, les microfissures ou déchirements peuvent entraîner une rupture de la garniture en cours d'utilisation et donc un dysfonctionnement total du cylindre de roue sur lequel est monté le piston défectueux. Un tel vice caché du piston peut donc avoir des conséquences tant économiques qu'humaines beaucoup plus graves que celles résultant de la rupture de la garniture lors de son montage.

Par ailleurs, il doit être noté que les diverses manipulations effectuées sur la garniture, entre sa fabrication et son montage, constituent autant de risques de salissure et de pollution de la garniture par des particules étrangères susceptibles d'affecter le fonctionnement convenable du système intégrant la pièce mécanique équipée de la garniture.

Il apparaît donc le besoin de disposer d'une nouvelle méthode de fabrication des pistons ci-dessus permettant de réduire autant que faire se peut le risque de vices cachés sur la garniture équipant le piston. Il doit être noté qu'un même problème se pose sur toutes les pièces mécaniques, sur lesquelles il est nécessaire de mettre en oeuvre une garniture en matière plastique dans la mesure où le montage de la garniture est susceptible d'endommager cette dernière.

Afin de remédier aux inconvénients ci-dessus, l'invention vise un nouveau procédé de fabrication d'une pièce mécanique pourvue d'une garniture en matière plastique qui permet, de manière avantageuse, de réduire les contraintes appliquées à la garniture, tant lors de son montage qu'après celui-ci pour éviter tout risque de détérioration de ladite garniture.

Ainsi, l'invention concerne un procédé de fabrication d'une pièce mécanique comprenant un corps pourvu d'une garniture surmoulée en matière plastique définissant au moins une surface fonctionnelle de contact avec une autre pièce mécanique par rapport à laquelle la première pièce mécanique est mobile.

Par ailleurs, selon la fonction de la pièce mécanique, il peut apparaître nécessaire de définir dans la garniture surmoulée un évidement ou une chambre. Or, les procédés connus de fabrication ne permettent pas de réaliser un tel évidement et cela plus particulièrement lorsque la garniture entoure la pièce mécanique et doit présenter une chambre ouverte radialement. Il apparaît donc le besoin de disposer d'un nouveau procédé de surmoulage qui permette d'atteindre cet objectif.

Afin d'atteindre cet objectif, l'invention concerne un procédé de fabrication d'une pièce mécanique comprenant un corps pourvu d'une garniture en matière plastique surmoulée dans une gorge périphérique du corps pour définir une lèvre d'étanchéité présentant au moins une surface fonctionnelle de contact avec une autre pièce mécanique par rapport à laquelle la première pièce mécanique est mobile.

Selon l'invention, le procédé consiste notamment à :
- mettre en oeuvre un moule comprenant, d'une part, un corps principal qui possède une surface de moulage destinée à définir, à elle seule, la surface fonctionnelle de la lèvre d'étanchéité et, d'autre part, au moins deux noyaux secondaires complémentaires,
- disposer, en tant que noyau central, le corps de la pièce mécanique dans le corps principal du moule,
- placer les noyaux secondaires en insérant radialement, en partie au moins, les noyaux secondaires dans la gorge périphérique de la pièce formant le noyau central, pour définir, dans la garniture surmoulée, une chambre annulaire ouverte radialement et former la lèvre d'étanchéité,
- fermer le moule,
- injecter la matière plastique,
- ouvrir le moule,
- retirer le noyau secondaire,
- et extraire la pièce mécanique du corps principal du moule.

Selon une caractéristique de l'invention, le procédé consiste à asservir la position du piston du noyau secondaire par rapport au corps, à la position du corps principal du moule.

Selon une autre caractéristique de l'invention, le procédé consiste à mettre en oeuvre un moule dont les deux noyaux secondaires complémentaires s'emboîtent dans le corps principal du moule, de manière qu'en position fermée du moule, la position des noyaux secondaires est asservie par cet emboîtement.

Selon encore une autre caractéristique de l'invention, le procédé consiste à aménager dans le corps de la pièce mécanique, au moins un canal d'injection pour le passage de la matière plastique constitutive de la garniture.

Selon encore une autre caractéristique de l'invention, le procédé consiste à mettre en oeuvre un moule conçu de telle façon que chaque surface fonctionnelle de la garniture est conformée par un seul des éléments constitutifs du moule pour disposer de surfaces fonctionnelles sans ligne de joint.

L'invention vise aussi à proposer une pièce mécanique comportant une garniture en matière plastique réalisée de telle sorte que la garniture ne soit pas soumise à des contraintes lors de son montage sur la pièce et ne présente aucune contrainte résiduelle après sa mise en place.

Afin d'atteindre cet objectif, l'invention concerne également une pièce mécanique comprenant un corps pourvu d'une garniture en matière plastique surmoulée dans une gorge périphérique présentée par le corps pour entourer ledit corps et définir une lèvre offrant au moins une surface fonctionnelle de contact avec une autre pièce mécanique par rapport à laquelle la première pièce mécanique est mobile.

Selon l'invention, la pièce est caractérisée en ce que la garniture comporte au moins une chambre annulaire ouverte radialement délimitant la lèvre d'étanchéité et en ce que la surface fonctionnelle de la lèvre d'étanchéité est dépourvue de ligne de joint.

Selon une caractéristique de l'invention, la gorge périphérique présente une forme sensiblement en "U" ouverte radialement.

Selon une autre caractéristique de l'invention, la chambre annulaire définit au moins une lèvre d'étanchéité sur la garniture surmoulée.

Selon encore une autre caractéristique de l'invention, le corps de ladite pièce présente au moins un canal d'injection aménagé pour permettre la circulation de la matière plastique lors du surmoulage de la garniture.

Selon encore une autre caractéristique de l'invention, la pièce mécanique est destinée à former un piston dans un cylindre de commande hydraulique ou pneumatique.

Dans une forme préférée de réalisation, l'invention concerne une pièce mécanique destinée à former le piston dans un cylindre de commande, dit récepteur, pour un circuit de freinage ou d'embrayage d'un véhicule. La garniture présente alors, d'une part, au moins une lèvre assurant une étanchéité dynamique et, d'autre part, au moins une lèvre assurant une étanchéité statique.

L'invention concerne également une pièce mécanique destinée à former le piston dans un cylindre de commande, dit émetteur, pour un circuit de freinage ou d'embrayage d'un véhicule. La garniture surmoulée présente alors, d'une part, au moins une surface fonctionnelle de guidage et, d'autre part, au moins une lèvre assurant une étanchéité dynamique.

Diverses autres caractéristiques ressortent de la description faite ci-dessous en référence aux dessins annexés qui montrent, à titre d'exemples non limitatifs, des formes de réalisation et de mise en oeuvre de l'objet de l'invention

La **fig. 1** est une coupe axiale d'une pièce mécanique conforme à l'invention.

La **fig. 2** est une coupe axiale illustrant un procédé de fabrication de la pièce mécanique selon l'invention dans un moule d'injection de matière plastique.

Les **fig. 3** à **5** sont des vues analogues à la **fig. 2** illustrant une variante préférée du procédé de fabrication d'une pièce mécanique conforme à l'invention et montrant différentes phases de la fermeture du moule mis en oeuvre.

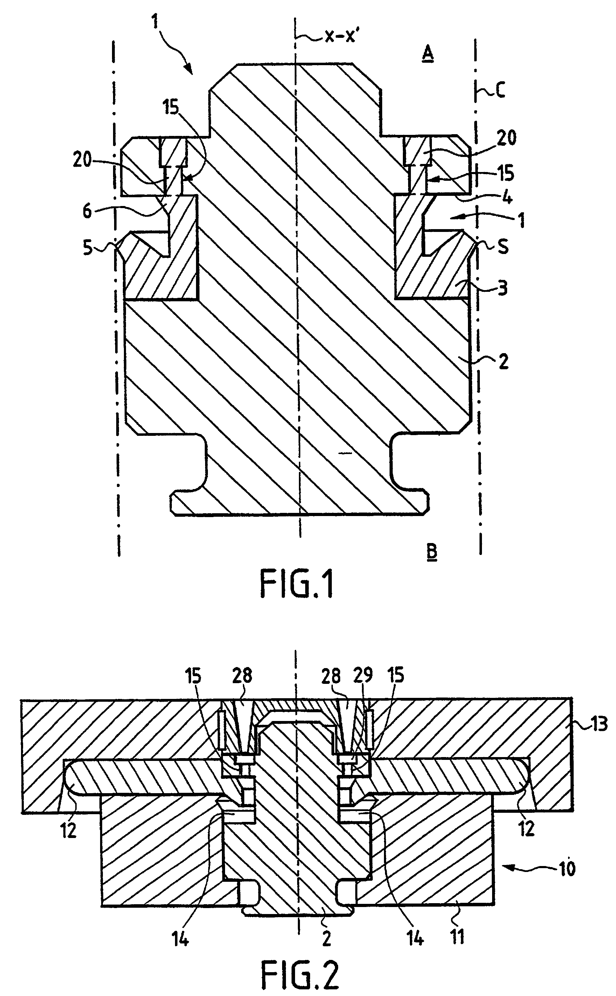

Comme le montre la **fig. 1,** la pièce mécanique, conforme à l'invention et désignée dans son ensemble par la référence **1,** comprend un corps **2** pourvu d'une garniture **3** en matière plastique définissant au moins une surface fonctionnelle **S** de contact avec une autre pièce mécanique **C** par rapport à laquelle la première pièce mécanique **1** est mobile.

Dans le cadre d'une application préférée mais non exclusive, la pièce mécanique, telle qu'illustrée à la **fig. 1,** est destinée à former le piston d'un cylindre **C** de commande, dit récepteur, pour un circuit hydraulique de freinage ou d'embrayage d'un véhicule à moteur tel qu'une automobile. Dans d'un circuit de freinage, un tel cylindre récepteur est plus particulièrement appelé cylindre de roue en raison de sa position sur le véhicule. Par ailleurs, ce cylindre est appelé récepteur, car il assure la transformation de l'énergie hydraulique du circuit en un travail mécanique et ceci par opposition à un cylindre de commande, dit émetteur, qui transforme une énergie mécanique en énergie hydraulique. Tel est par exemple le cas, dans un circuit de freinage, du cylindre émetteur, dit maître cylindre, qui transforme la pression exercée sur la pédale de frein en pression hydraulique dans le circuit.

Le corps **2** de la pièce mécanique ou piston **1** présente, de préférence pour cette application, une symétrie de révolution d'axe **x-x'** et, plus généralement, une forme s'inscrivant dans un cylindre de section droite transversale circulaire.

Le corps **2** peut être réalisé en tout matériau approprié et, de préférence, en matière plastique. Le corps **2** pourrait également être réalisé en métal.

Le corps **2** présente également une gorge **4** à l'intérieur de laquelle est logée la garniture **3** en matière plastique qui assure une fonction d'étanchéité en définissant une lèvre **5** déterminant la surface fonctionnelle **S** destinée à être en contact avec les parois **C** du cylindre de commande. La garniture **3** présente également une lèvre interne **6** qui assure une étanchéité statique au niveau du corps **2** du piston. Ainsi, la garniture **3** permet de délimiter au sein du cylindre **C** et, de part et d'autre du piston **1**, deux compartiments **A** et **B** séparés de manière étanche par les lèvres **5** et **6.**

Selon une caractéristique essentielle de l'invention, la garniture est réalisée en matière plastique, de préférence mais non exclusivement, en élastomère tel que du caoutchouc naturel ou synthétique, surmoulé sur le corps **2** à l'intérieur de la gorge **4.**

Bien entendu, la garniture **3** pourrait être réalisée dans une autre matière plastique que du caoutchouc, qui serait susceptible d'être surmoulée sur le corps **2** et qui présenterait des caractéristiques mécaniques compatibles avec la fonction de la garniture **3.**

Selon un procédé conforme à l'invention, la fabrication de la pièce **1** fait intervenir, après réalisation du corps **2,** un surmoulage de la garniture **3.** A cette fin, et comme le montre la **fig. 2,** le corps **2** est par exemple introduit dans un moule **10** au sein duquel la matière plastique constitutive de la garniture **3** est injectée.

Bien entendu, le surmoulage de la garniture **3** pourrait être effectué selon une méthode, autre que l'injection, appropriée à la nature de la matière plastique mise en oeuvre et à la fonction de la garniture **3** sur la pièce mécanique **2.**

Lorsque la garniture **3** entoure une partie au moins du corps **2,** selon une forme préférée de mise en oeuvre du procédé, la fabrication de la pièce **1** consiste à disposer le corps **2** en tant que noyau central dans un corps principal **11** du moule **10.** Il est également mis en oeuvre au moins un noyau secondaire **12** et, selon l'exemple illustré, deux noyaux secondaires **12** qui sont de préférence complémentaires et qui s'insèrent partiellement dans la gorge de surmoulage **4** pour créer une forme fonctionnelle interne ou chambre **4**_{**1**}**.** Il doit être remarqué que de manière préférée, la gorge **4** présente une forme sensiblement en "U" ouverte radialement et que les noyaux secondaires **12** viennent entourer le corps **2** en s'insérant au niveau de leur empreinte dans la gorge **4.**

Le moule **10** est, enfin, fermé au moyen d'un corps d'injection **13.**

Ensuite, la matière plastique est injectée dans le moule pour former la garniture **3** autour du corps **2** au niveau de la gorge **4,** dans l'espace ou empreinte **14** délimité par celle-ci et les parties actives des noyaux secondaires **12.** Selon une forme préférée mais non exclusive de réalisation du corps **2,** ce dernier présente au moins un et, dans l'exemple illustré, plusieurs canaux d'injection **15** aménagés pour permettre, pendant l'injection, le passage de la matière plastique.

Après injection, le moule **10** est ouvert et la pièce **1** comprenant le corps **2** pourvu de la garniture d'étanchéité **3** en est retirée.

Ainsi, la fabrication de la pièce **1** n'implique, de manière avantageuse, aucune contrainte sur la garniture **3** qui se trouve sur le corps **2** dans un état de repos. De plus, le procédé selon l'invention simplifie grandement la conception de la forme de la garniture **3,** car cette forme est directement déterminée par la conformation de l'empreinte du moule **10.**

Selon une forme de réalisation préférée, chaque surface fonctionnelle **S** de la garniture **3,** destinée à être en contact avec une autre pièce mécanique, comme cela est le cas de la surface fonctionnelle de la lèvre **5,** est définie par un seul élément constitutif du moule **10** et, selon l'exemple illustré, par la surface de moulage ou empreinte du corps principal **11.** Cette caractéristique permet, de manière avantageuse, d'obtenir sur la garniture **3** une surface fonctionnelle **S** ne présentant aucune ligne de joint. Cet aspect de la surface fonctionnelle **S,** sans aucune discontinuité, permet notamment de garantir l'efficacité de l'étanchéité dynamique assurée par la garniture **3.**

Par ailleurs, la mise en oeuvre des canaux d'injection **15** sur le corps **2** permet d'assurer une immobilisation positive en rotation de la garniture **3** sur le corps **2** par la présence de carottes de moulage **20** qui subsistent au sein des canaux **15** après exécution de la garniture **3.** Ainsi, la présence des canaux d'injection **15** aménagés dans le corps **2** réalise de manière particulièrement avantageuse, un ancrage efficace de la garniture **3** sur ledit corps **2,** ancrage qui favorise l'étanchéité statique.

Dans le même sens, le surmoulage de la garniture **3** assure une bonne adhérence de celle-ci sur le corps **2** sans adjonction de produits adhésifs.

Il convient aussi de remarquer que le surmoulage de la garniture **3** sur le corps **2** évite de nombreuses manipulations de la garniture et réduit ainsi au maximum les risques de pollution de cette dernière par des particules étrangères.

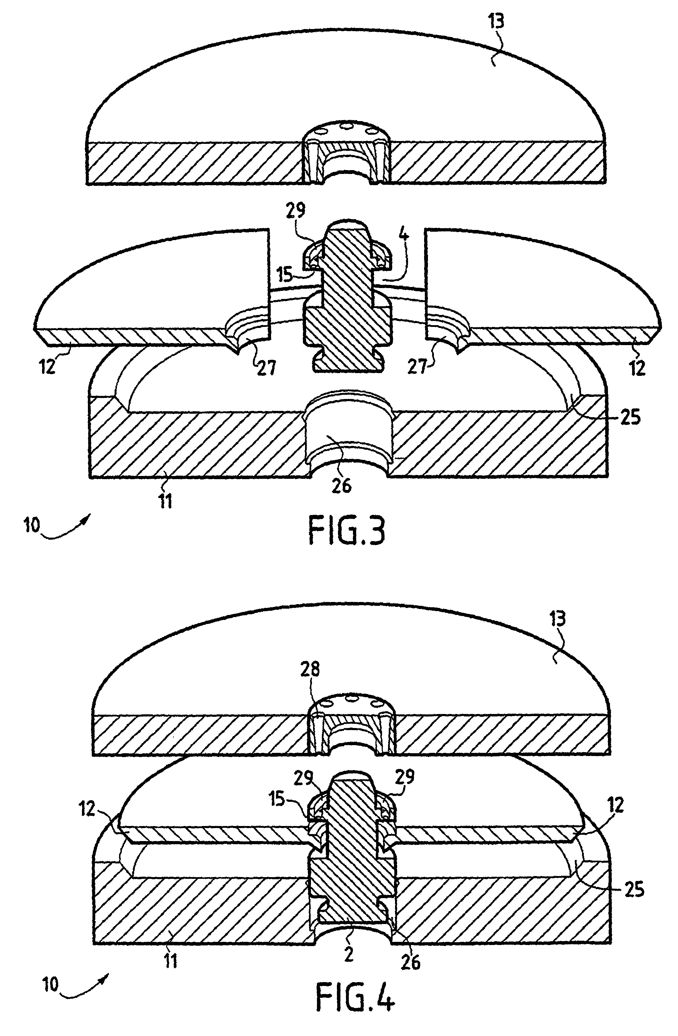

Selon une forme préférée de mise en oeuvre du procédé de fabrication, le positionnement relatif des différents éléments constitutifs de l'empreinte du moule est assuré par un emboîtement de ceux-ci les uns dans les autres, comme cela ressort plus particulièrement des **fig. 3 à 5.** Cette disposition de l'invention permet d'assurer le respect par la surface fonctionnelle **S** définie par la garniture **3,** de dimensions externes imposées par le moule, indépendamment de toutes variations possibles des côtes du corps **2.**

Il n'est alors plus nécessaire d'assurer un contrôle dimensionnel de toutes les pièces mécaniques **1** fabriquées et ce contrôle dimensionnel peut alors être remplacé par une vérification régulière des côtes de l'empreinte du moule. Ainsi, le procédé conforme à l'invention permet d'améliorer la fabrication et le contrôle des pièces mécaniques et d'en réduire le prix de revient.

Afin de permettre un tel positionnement relatif, chaque noyau secondaire **12** est conçu pour s'emboîter dans un évidement **25** complémentaire présenté par le corps principal **11** du moule.

Selon l'exemple illustré, les deux noyaux secondaires **12** sont réalisés sous la forme de deux demi-disques complémentaires, destinés à être emboîtés dans l'évidement **25** du corps principal **11.** Cet emboîtement, en plus de réaliser un parfait positionnement des noyaux secondaires **12** par rapport au corps principal, permet d'assurer une étanchéité à la matière injectée de l'empreinte ainsi définie sur le moule, tout en laissant subsister des lignes de fuites pour l'air présent dans l'empreinte **14** avant l'injection de la matière plastique.

De manière préférée, la surface de contact des demi-disques avec l'évidement complémentaire **25** est tronconique pour assurer un parfait positionnement relatif des demi-disques **12** dans le corps principal **11.**

La fabrication de la pièce **1** fait alors intervenir les étapes suivantes.

Tout d'abord, le corps **2** est disposé en tant que noyau central, au sein du corps principal **11** du moule, comme cela ressort de la **fig. 3.** Le bon positionnement du corps **2** est assuré par l'emboîtement d'une partie de celui-ci dans un alésage complémentaire **26** du corps principal **11.**

Pendant la mise en place du corps **2,** les noyaux secondaires **12** sont présentés de manière à disposer leur partie active ou empreinte **27** dans la gorge correspondante **4** du corps **2,** comme le montre la **fig. 4.**

Ensuite, les noyaux secondaires viennent se verrouiller dans l'évidement tronconique **25.** La mise en oeuvre des noyaux secondaires **12** qui viennent entourer le corps **2** en étant engagés partiellement dans la gorge **4,** permet de manière fort avantageuse, de conformer la chambre annulaire **4**_{**1**} dans la garniture **3** et de définir ainsi la lèvre d'étanchéité dynamique **5.** La chambre **4**_{**1**} ouverte radialement ou à sa périphérie contribue à l'efficacité de l'étanchéité assurée par la lèvre **5** lors de la mise en oeuvre de la pièce conforme à l'invention.

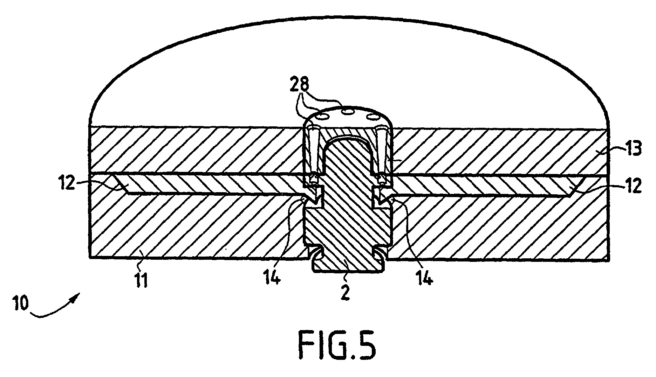

Après verrouillage des noyaux, le corps d'injection **13** est placé pour fermer le moule **10,** tel que cela ressort de la **fig. 5.**

Après cette phase de constitution du moule dans son intégralité, le processus de fabrication de la pièce **1** se poursuit, comme expliqué précédemment, par des phases d'injection de la matière plastique puis d'ouverture du moule, et l'extraction de la pièce mécanique **1** conforme à l'invention ainsi fabriquée.

En ce qui concerne l'injection de la matière plastique, il doit être noté que le corps d'injection présente au moins un et, de préférence, plusieurs passages d'injection **28** destinés à acheminer la matière plastique vers les canaux d'injection **15** du corps **2.**

Selon une caractéristique préférée, afin de remédier au problème du positionnement angulaire du corps **2** dans le corps de moule principal **11** pour assurer une parfaite communication entre les canaux **15** et les passages **28,** le corps **2** présente une gorge annulaire **29** dans laquelle s'ouvrent les canaux **15** et débouchent les passages **28.** De plus, cette gorge **29** permet une bonne répartition de la matière plastique dans l'empreinte **14** délimitée par, d'une part, le corps principal **11** et des noyaux secondaires **12** du moule et, d'autre part, le corps **2** de la pièce mécanique.

Dans les exemples ci-dessus, le procédé de fabrication a été présenté en mettant en oeuvre un moule mono-empreinte, permettant d'effectuer le surmoulage de la garniture sur un seul corps à la fois. Toutefois, selon l'invention, le moule utilisé peut être multi-empreintes et donc permettre la prise en charge de plusieurs corps lors d'une seule opération de moulage. Un tel moule permet alors de surmouler simultanément au moins une garniture sur chaque corps inséré dans le moule.

De même, selon les exemples ci-dessus, il est mis en oeuvre deux noyaux secondaires mais il pourrait en être utilisé plus de deux.

## Revendications

1. Procédé de fabrication d'une pièce mécanique **(1)** comprenant un corps **(2)** pourvu d'une garniture en matière plastique surmoulée **(3)** dans une gorge périphérique du corps **(2)** pour définir une lèvre d'étanchéité comprenant au moins une surface fonctionnelle **(S)** de contact avec une autre pièce mécanique **(C)** par rapport à laquelle la première pièce mécanique **(1)** est mobile, le procédé comprenant les étapes suivantes : .
- mettre en oeuvre un moule **(10)** comprenant d'une part un corps principal **(11),** qui possède une surface de moulage destinée à définir, à elle seule, la surface fonctionnelle **(S)** de la garniture et d'autre part, au moins deux noyaux secondaires **(12)** complémentaires,
- disposer, en tant que noyau central, le corps **(2)** de la pièce mécanique **(1)** dans le corps principal **(11)** du moule,
- placer les noyaux secondaires **(12)** en insérant radialement en partie au moins, les noyaux secondaires dans la gorge périphérique du corps **(2)** de la pièce formant le noyau central, pour définir dans la garniture surmoulée, une chambre annulaire ouverte radialement et former la lèvre d'étanchéité,
- fermer le moule,
- injecter la matière plastique,
- ouvrir le moule,
- retirer le noyau secondaire,
- et extraire la pièce mécanique **(1)** du corps principal **(11)** du moule.

2. Procédé de fabrication selon la revendication 1, **caractérisé en ce qu'**il consiste à asservir la position du noyau secondaire par rapport au corps **(2),** à la position du corps principal.

3. Procédé de fabrication selon la revendication 1 ou 2, **caractérisé en ce que** les deux noyaux secondaires complémentaires **(12)** s'emboîtent dans le corps principal **(11)** du moule, de manière qu'en position fermée du moule **(10),** la position des noyaux secondaires **(12)** est asservie par cet emboîtement.

4. Procédé de fabrication selon l'une des revendications 1 à 3, **caractérisé en ce qu'**il consiste à aménager dans le corps de la pièce mécanique, au moins un canal d'injection **(15)** pour le passage de la matière plastique constitutive de la garniture **(3).**

5. Procédé de fabrication selon l'une des revendications 1 à 4, **caractérisé en ce qu'**il consiste à mettre en oeuvre un moule **(10)** conçu de telle façon que chaque surface fonctionnelle **(S)** de la garniture est conformée par un seul des éléments constitutifs du moule **(10)** pour disposer de surfaces fonctionnelles sans ligne de joint.

6. Pièce mécanique comprenant un corps **(2)** pourvu d'une garniture en matière plastique **(3)** surmoulée dans une gorge périphérique **(4)** présentée par le corps **(2)** pour entourer ledit corps **(2)** et définir au moins une surface fonctionnelle **(S)** de contact avec une autre pièce mécanique **(C)** par rapport à laquelle la première pièce mécanique est mobile, **caractérisée en ce que** la garniture **(3)** comporte au moins une chambre annulaire **(4**_{**1**}**)** ouverte radialement et **en ce que** la surface fonctionnelle de la garniture surmoulée est dépourvue de ligne de joint.

7. Pièce mécanique selon la revendication 6, **caractérisée en ce que** la gorge périphérique **(4)** présente une forme sensiblement en "U" ouverte radialement.

8. Pièce mécanique selon la revendication 6 ou 7, **caractérisée en ce que** la chambre annulaire (**41**) définit au moins une lèvre d'étanchéité sur la garniture surmoulée (**3**).

9. Pièce mécanique selon l'une des revendications 6 à 8, **caractérisée en ce que** le corps (**2**) de ladite pièce présente au moins un canal d'injection (**15**) aménagé pour permettre la circulation de la matière plastique lors du surmoulage de la garniture (**3**).

10. Pièce mécanique selon l'une au moins des revendications 6 à 9, **caractérisée en ce qu'**elle est destinée à former un piston dans un cylindre **(C)** de commande hydraulique ou pneumatique.

11. Pièce mécanique selon la revendication 10, **caractérisée en ce qu'**elle est destinée à former le piston dans un cylindre de commande (**C**), dit récepteur, pour un circuit de freinage d'un véhicule et **en ce que** la garniture présente, d'une part, au moins une lèvre assurant une étanchéité dynamique **(5)** et, d'autre part, au moins une lèvre assurant une étanchéité statique (**6**).

12. Pièce mécanique selon l'une des revendications 6 à 10, **caractérisée en ce que** la garniture est réalisée en élastomère.

## Patentansprüche

1. Verfahren zum Herstellen eines Maschinenteils (1) mit einem Körper, der mit einer in einer umlaufenden Nut des Körpers (2) aufgespritzten Dichtung aus Kunststoff (3) zum Bilden einer Dichtungslippe versehen ist, die wenigstens eine funktionelle Oberfläche (S) in Kontakt mit einem anderen Maschinenteil (C) aufweist, in Bezug zu dem das erste Maschinenteil (1) beweglich ist, wobei das Verfahren die folgenden Schritte umfasst:
- Ausführen einer Form (10), die einerseits einen Hauptkörper (11) umfasst, der eine Gussformoberfläche besitzt, die dazu bestimmt ist, alleine die funktionelle Oberfläche (S) der Dichtung zu bilden, und andererseits wenigstens zwei komplementäre Nebenkerne (12) aufweist,
- Anordnen des Körpers (2) des Maschinenteils (1) in dem Hauptkörper (11) der Form als Hauptformkern,
- Platzieren der Nebenkerne (12) durch wenigstens teilweises radiales Einfügen der Nebenkerne in die umlaufende Nut des Körpers (2) des den Hauptkern bildenden Teils, zum Ausbilden einer radial offenen ringförmigen Kammer in der aufgespritzten Dichtung und zum Formen der Dichtungslippe,
- Schließen der Form,
- Einspritzen des Kunststoffs,
- Öffnen der Form,
- Entfernen des Nebenkerns,
- und Entnehmen des Maschinenteils (1) aus dem Hauptkörper (11) der Form.

2. Fertigungsverfahren nach Anspruch 1,
**dadurch gekennzeichnet, dass** es darin besteht, die Position des Nebenkerns in Bezug auf den Körper (2) an der Position des Hauptkörpers auszurichten.

3. Fertigungsverfahren nach Anspruch 1 oder 2,
**dadurch gekennzeichnet, dass** die zwei komplementären Nebenkerne (12) derart in den Hauptkörper (11) der Form gesteckt werden, dass die Position der Nebenkerne (12) bei geschlossener Position der Form (10) durch dieses Einstecken ausgerichtet wird.

4. Fertigungsverfahren nach einem der Ansprüche 1 bis 3,
**dadurch gekennzeichnet, dass** es darin besteht, in dem Körper des Maschinenteils wenigstens einen Einspritzkanal (15) für den Durchlass des die Dichtung (3) bildenden Kunststoffs anzuordnen.

5. Fertigungsverfahren nach einem der Ansprüche 1 bis 4,
**dadurch gekennzeichnet, dass** es darin besteht, eine Form (10) auszuführen, die so konzipiert ist, dass jede funktionelle Oberfläche (S) der Dichtung durch ein einziges der wesentlichen Bestandteile der Form (10) gebildet wird, um über funktionelle Oberflächen ohne Trennfugen zu verfügen.

6. Maschinenteil mit einem Körper (2), der mit einer Dichtung aus Kunststoff (3) versehen ist, die in eine umlaufende Nut (4) aufgespritzt ist, die der Körper (2) aufweist, um den Körper (2) zu umgeben und wenigstens eine funktionelle Oberfläche (S) in Kontakt mit einem anderen Maschinenteil (C) zu bilden, in Bezug zu dem das erste Maschinenteil beweglich ist,
**dadurch gekennzeichnet, dass** die Dichtung (3) wenigstens eine radial geöffnete ringförmige Kammer (4₁) aufweist, und dass die funktionelle Oberfläche der aufgespritzten Dichtung nicht mit Trennfugen versehen ist.

7. Maschinenteil nach Anspruch 6,
**dadurch gekennzeichnet, dass** die umlaufende Nut (4) im Wesentlichen die Form eines radial geöffneten U aufweist.

8. Maschinenteil nach Anspruch 6 oder 7,
**dadurch gekennzeichnet, dass** die ringförmige Kammer (4₁) wenigstens eine Dichtungslippe an der aufgespritzten Dichtung (3) bildet.

9. Maschinenteil nach einem der Ansprüche 6 bis 8,
**dadurch gekennzeichnet, dass** der Körper (2) des Teils wenigstens einen Einspritzkanal (15) aufweist, der so angeordnet ist, dass das Zirkulieren des Kunststoffs beim Aufspritzen der Dichtung ermöglicht wird.

10. Maschinenteil nach einem der Ansprüche 6 bis 9,
**dadurch gekennzeichnet, dass** es dazu bestimmt ist, einen Kolben in einem hydraulischen oder pneumatischen Steuer-Zylinder (C) zu bilden.

11. Maschinenteil nach Anspruch 10,
**dadurch gekennzeichnet, dass** es dazu bestimmt ist, den Kolben in einem so genannten Nehmer-Steuer-Zylinder (C) für einen Bremskreis eines Fahrzeugs zu bilden und dass die Dichtung einerseits wenigstens eine Lippe aufweist, die eine dynamische Abdichtung (5) gewährleistet, und andererseits wenigstens eine Lippe, die eine statische Abdichtung (6) gewährleistet.

12. Maschinenteil nach einem der Ansprüche 6 bis 10,
**dadurch gekennzeichnet, dass** die Dichtung aus Elastomer ausgeführt ist.

## Claims

1. Method for producing a mechanical part (1) including a body (2) provided with a moulded plastic lining (3) in a peripheral throat of the body (2) to define a sealing lip comprising at least one functional surface (S) in contact with another mechanical part (C) with respect to which the first mechanical part (1) is mobile, the method comprising the following steps:
- using a mould (10) including firstly a main body (11),which has a moulding surface intended to define, on its own, the functional surface (S) of the lining and secondly, at least two secondary complementary cores (12);
- having, as the central core, the body (2) of the mechanical part (1) in the main body (11) of the mould;
- placing the secondary cores (12) by inserting radially at least in part, the secondary cores in the peripheral throat of the body (2) of the part forming the central core, so as to define in the moulded lining, an annular chamber that is radially open and so as to form the sealing lip;
- closing the mould;
- injecting the plastic material;
- opening the mould;
- removing the secondary core; and
- extracting the mechanical part (1) from the main body (11) of the mould.

2. Production method according to claim 1, **characterized in that** it consists in controlling the position of the secondary core with respect to the body (2), to the position of the main body.

3. Production method according to claim 1 or 2, **characterised in that** the two complementary secondary cores (12) nest inside the main body (11) of the mould so that in a closed position of the mould (10), the position of the secondary cores (12) is automatically controlled by this nesting.

4. Production method according to one of claims 1 to 3, **characterised in that** it consists in fitting in the body of the mechanical part at least one injection channel (15) for passage of the plastic material making up the lining (3).

5. Production method according to one of claims 1 to 4, **characterised in that** it consists in using a mould (10) designed in such a way that each functional surface (S) of the lining is shaped by only one of the elements making up the mould (10) so as to have functional surfaces without any parting line.

6. Mechanical part including a body (2) provided with a moulded plastic lining (3) in a peripheral throat (4) provided by the body (2) so as to surround said body (2) and define at least one functional surface (S) in contact with another mechanical part (C) with respect to which the first mechanical part is mobile, **characterised in that** the lining (3) includes at least one annular chamber (4₁) that is open radially and **in that** the functional surface of the moulded lining has no parting line.

7. Mechanical part according to claim 6, **characterised in that** the peripheral throat (4) has a substantially open radial U-shape.

8. Mechanical part according to claim 6 or 7, **characterised in that** the annular chamber (41) defines at least one sealing lip on the moulded lining (3).

9. Mechanical part according to one of claims 6 to 8, **characterised in that** the body (2) of said part has at least one injection channel (15) fitted so as to allow circulation of the plastic material during moulding of the lining (3).

10. Mechanical part according to at least one of claims 6 to 9, **characterised in that** it is intended to form a piston inside a pneumatic or hydraulic control cylinder (C).

11. Mechanical part according to claim 10, **characterised in that** it is intended to form the piston in a control cylinder (C) known as the receiving cylinder for a braking circuit of a vehicle and **in that** the lining firstly has at least one lip ensuring dynamic sealing (5) and secondly at least one lip providing static sealing (6).

12. Mechanical part according to one of claims 6 to 10, **characterised in that** the lining is made of elastomer.
